# FASCICULE DE BREVET EUROPEEN

(11) **EP 4 611 253 B1**
(45) Date de publication et mention de la délivrance du brevet: **18.11.2026**
(21) Numéro de dépôt: 25160695.0
(22) Date de dépôt: 27.02.2025
(51) Int. Cl.: H02P 29/032, E06B 9/68, E06B 9/72

(54) **PROCÉDÉ DE COMMANDE EN FONCTIONNEMENT D'UN ACTIONNEUR ÉLECTROMÉCANIQUE, ACTIONNEUR ÉLECTROMÉCANIQUE ASSOCIÉ ET DISPOSITIF D OCCULTATION COMPRENANT UN TEL ACTIONNEUR**
VERFAHREN ZUR STEUERUNG EINES ELEKTROMECHANISCHEN AKTUATORS, ELEKTROMECHANISCHER AKTUATOR DAFÜR UND VERDUNKELUNGSVORRICHTUNG MIT SOLCH EINEM AKTUATOR
METHOD FOR CONTROLLING THE OPERATION OF AN ELECTROMECHANICAL ACTUATOR, ASSOCIATED ELECTROMECHANICAL ACTUATOR AND CONCEALMENT DEVICE COMPRISING SUCH AN ACTUATOR

(30) Priorité: 29.02.2024 FR 2402029
(43) Date de publication de la demande: 03.09.2025
(73) Titulaire: Somfy Activites SA, 74300 Cluses (FR)
(72) Inventeur: DESFOSSEZ, Benjamin, 74300 Cluses (FR)
(74) Mandataire: Lavoix

(56) Documents cités:
- FR-A1- 3 135 106
- JP-A- 2019 058 044

## Description

### Domaine Technique

La présente invention concerne un procédé de commande en fonctionnement d'un actionneur électromécanique en réponse à une commande. Elle concerne également un actionneur électromécanique mettant en œuvre un tel procédé. Elle concerne enfin un dispositif d'occultation comprenant un tel actionneur.

### Etat de la Technique

Un actionneur électromécanique comprend généralement un moteur électrique à courant continu, avec ou sans balais, et un module de contrôle moteur. Le moteur électrique est piloté en réponse à une commande par une tension moteur en fonction d'une valeur de tension de bus. Le module de contrôle moteur comprend un correcteur de vitesse angulaire de rotation du moteur électrique, tel qu'un correcteur PI (acronyme de « Proportionnel Intégral ») ou un correcteur PID (acronyme de « Proportionnel Intégral Dérivé »). Le correcteur de vitesse angulaire délivre, en sortie, une valeur corrigée de la tension moteur, de sorte à maintenir une consigne de vitesse angulaire du moteur électrique lors de la commande du moteur électrique.

Un inconvénient apparaît en cas de surcharge momentanée ou prolongée du moteur électrique, par exemple en raison de frottements ou de vieillissement de certains composants propres à l'actionneur électromécanique ou propres à un dispositif d'occultation comprenant un tel actionneur électromécanique. Dans ce cas, la valeur de puissance électrique instantanée consommée par l'actionneur électromécanique atteint ou dépasse une valeur seuil de puissance électrique maximum prédéterminée, pouvant caractériser une valeur seuil maximum de puissance pouvant être consommé par l'actionneur électromécanique, et/ou une valeur seuil maximum de puissance pouvant être fournie à l'actionneur électromécanique par une source d'alimentation électrique alimentant l'actionneur électromécanique. La puissance électrique instantanée consommée peut, par exemple, endommager l'actionneur électromécanique, la source d'alimentation électrique ou, si celle-ci dispose d'une sécurité de fonctionnement, peut causer l'interruption de la transmission de puissance électrique à l'actionneur électromécanique.

On connaît le document FR 3 115 555 A1 qui décrit un procédé de commande en fonctionnement d'un actionneur électromécanique alimenté par une batterie en réponse à une commande. Ce procédé permet de réduire la puissance électrique consommée par l'actionneur électromécanique en dessous d'une valeur seuil maximum de puissance prédéterminé, en déterminant la puissance consommée par l'actionneur électromécanique lors d'un déplacement de l'écran, puis en diminuant la consigne de vitesse angulaire lors du déplacement de l'écran, suivant si la puissance consommée lors du déplacement de l'écran atteint ou dépasse la valeur seuil maximum de puissance. Ce procédé donne globalement satisfaction.

Toutefois, un inconvénient de ce procédé est que, en cas de surcharge momentanée ou prolongée du moteur électrique lors du déplacement de l'écran, ce procédé met en œuvre au moins une itération dans laquelle l'actionneur électromécanique consomme une valeur de puissance supérieure ou égale à la valeur seuil maximum de puissance, cette valeur consommée étant réduite successivement pour chaque déplacement de l'écran suivant jusqu'à devenir inférieure à la valeur seuil maximum de puissance. Si la batterie de l'actionneur électromécanique peut supporter un nombre limité de déplacement de l'écran au cours desquels la valeur de puissance consommée atteint ou dépasse la valeur seuil maximum de puissance, d'autres sources de puissance peuvent présenter un dysfonctionnement ou tout simplement s'arrêter de fonctionner. Par exemple, un commutateur réseau PoE arrêtera d'alimenter électriquement l'actionneur électromécanique si la valeur de puissance consommée par celui-ci atteint ou dépasse une valeur seuil maximum de puissance que le commutateur réseau PoE peut fournir à l'actionneur électromécanique.

En outre, ce procédé, que l'on peut qualifier d'apprentissage, nécessite une ressource de calcul mise en œuvre au niveau applicatif du module de commande, ce qui risque de provoquer une latence, par exemple au niveau des applications exécutées par le module de commande, ou au niveau de la fonction de limitation de puissance.

On connaît également le document FR 3 135 106 A1 qui décrit un procédé de commande en fonctionnement d'un actionneur électromécanique alimenté électriquement par un équipement d'alimentation électrique, ce procédé étant similaire à celui du document FR 3 115 555 A1, et dans lequel le seuil de puissance maximum est configuré pour être inférieur à un deuxième seuil de puissance au-delà duquel l'équipement d'alimentation électrique déconnecte l'alimentation électrique de l'actionneur électromécanique. Ce procédé donne également satisfaction.

Toutefois, un inconvénient de ce procédé est d'une part qu'il nécessite ici aussi un apprentissage et de la ressource de calcul, et d'autre part qu'il nécessite une marge interdite de fonctionnement, entre les deux seuils de puissance précités, réduisant ainsi l'efficacité de l'actionneur électromécanique.

On connaît également le document US 2008/260363 A1 qui décrit un procédé de commande en fonctionnement d'un actionneur électromécanique en réponse à une commande. Ce procédé comprend des étapes tenant compte d'une tension de bus, en cas de risque de surcharge électrique. Cependant, ce document est muet concernant la façon de contrôler une tension d'alimentation d'un moteur électrique appartenant à l'actionneur électromécanique.

On connaît également le document JP2019058044A qui enseigne un procédé de commande en fonctionnement d'un moteur au moyen, entre autres, d'un module de contrôle de moteur comprenant une unité de comparaison de vitesse, une unité de contrôle de vitesse, une unité de comparaison de courant, une unité de contrôle de courant, une unité de détermination de courant de correction, une unité de correction de courant et une unité de génération d'un signal de commande.

La présente invention a pour but de résoudre les inconvénients précités et de proposer un procédé de commande en fonctionnement qui permet d'adapter efficacement une tension d'alimentation d'un moteur d'un actionneur électromécanique en fonction de son environnement et/ou de ses caractéristiques.

### Résumé de l'invention

A cet effet, l'invention concerne selon un premier aspect un procédé de commande en fonctionnement d'un actionneur électromécanique en réponse à une commande, l'actionneur électromécanique comprenant un moteur électrique à courant continu et un module de contrôle moteur, le moteur électrique étant piloté, en réponse à la commande, par une tension moteur en fonction d'une valeur de tension de bus, le procédé comprenant une étape consistant à surveiller l'amplitude d'un courant traversant le moteur électrique lors de la commande du moteur électrique. Conformément à l'invention, le module de contrôle moteur comprend un correcteur de vitesse angulaire de rotation du moteur électrique, le correcteur de vitesse angulaire délivrant en sortie une valeur corrigée de la tension moteur, de sorte à maintenir une consigne de vitesse angulaire du moteur électrique lors de la commande du moteur électrique. En outre, le procédé comprend au moins les étapes suivantes :
- déterminer une valeur seuil maximum de tension moteur admissible pour le moteur électrique (16) en fonction de l'amplitude du courant traversant le moteur électrique et d'une valeur seuil maximum de puissance prédéterminée ;
- limiter la valeur de tension moteur à la valeur seuil maximum de tension moteur, ou mettre à zéro la valeur de tension moteur, si la valeur de tension moteur atteint ou dépasse la valeur seuil maximum de tension moteur et maintenir la valeur de tension moteur à la valeur corrigée de tension moteur si la valeur de tension moteur est inférieure à la valeur seuil maximum de tension moteur.

Grâce à l'invention, la valeur de la tension moteur d'alimentation du moteur électrique de l'actionneur peut être ajustée de façon efficace et rapide, notamment en fonction des caractéristiques du moteur électrique et/ou d'une source d'alimentation en courant du moteur électrique, sans risque que la puissance électrique fournie au moteur ne soit préjudiciable à son fonctionnement. L'invention est particulièrement pertinente pendant une surcharge du moteur électrique de l'actionneur électromécanique.

Selon des aspects avantageux mais non obligatoires de l'invention, un tel procédé peut incorporer une ou plusieurs des caractéristiques suivantes, prises selon toute combinaison techniquement admissible :
- Le module de contrôle moteur comprend un pont inverseur alimenté électriquement par la tension de bus et un circuit de commande du pont inverseur, et dans lequel le circuit de commande est piloté en réponse à la commande par un signal modulé en largeur d'impulsion de telle sorte que le signal modulé en largeur d'impulsion applique la tension moteur au moteur électrique, le signal modulé en largeur d'impulsion étant caractérisé par un rapport cyclique.
- Le courant traversant le moteur électrique est filtré de telle sorte à limiter des variations brutales de la valeur d'intensité.
- La valeur seuil maximum de puissance est égale à une valeur seuil de puissance que peut consommer l'actionneur électromécanique.
- La tension de bus est fournie à partir d'une source d'alimentation électrique, la valeur seuil maximum de puissance étant déterminée en fonction d'une valeur seuil de puissance fournie par la source d'alimentation électrique.
- La valeur seuil maximum de puissance est déterminée en fonction d'une valeur seuil de puissance de la source d'alimentation électrique au-delà de laquelle la source d'alimentation électrique cesse d'alimenter électriquement l'actionneur électromécanique.

Selon un deuxième aspect, l'invention concerne un actionneur électromécanique comprenant un module de contrôle moteur configuré pour mettre en œuvre un procédé de commande en fonctionnement tel que mentionné précédemment.

Selon des aspects avantageux mais non obligatoires de l'invention, un tel actionneur peut incorporer une ou plusieurs des caractéristiques suivantes, prises selon toute combinaison techniquement admissible :
- Le moteur électrique à courant continu est de type sans balais.
- L'actionneur électromécanique comprend un module contrôle moteur configuré pour mettre en œuvre un procédé de commande en fonctionnement tel que décrit ci-dessus, dans lequel la source d'alimentation électrique est une source d'alimentation électrique en courant continu.
- L'actionneur électromécanique comprend un module contrôle moteur configuré pour mettre en œuvre un procédé de commande en fonctionnement tel que décrit précédemment, dans lequel la source d'alimentation électrique est une batterie de type rechargeable ou non-rechargeable.

Selon un troisième aspect, l'invention concerne un dispositif d'occultation comprenant un écran mobile et un dispositif d'entraînement motorisé incluant un actionneur électromécanique. Conformément à l'invention, l'actionneur électromécanique est tel que décrit précédemment.

L'actionneur et le dispositif d'occultation de l'invention procurent sensiblement les mêmes avantages que le procédé de l'invention.

### Brève description des figures

La présente invention sera bien comprise à l'aide de la description qui suit, faite en référence aux figures annexées, dans lesquelles des signes de références identiques correspondent à des éléments structurellement et/ou fonctionnellement identiques ou similaires.
[Fig 1] La figure 1 représente une vue schématique simplifiée d'un dispositif d'occultation comprenant un actionneur électromécanique conforme à un mode de réalisation de l'invention ;
[Fig 2] La figure 2 représente une vue schématique simplifiée d'un dispositif d'entraînement motorisé comprenant un actionneur électromécanique conforme à un mode de réalisation de l'invention et appartenant au dispositif d'occultation de la figure 1 ;
[Fig 3] La figure 3 représente schéma électrique d'un module de contrôle moteur d'un moteur électrique à courant continu appartenant à l'actionneur électromécanique représenté à la figure 2 ; et
[Fig 4] La figure 4 représente un ordinogramme d'un procédé de commande en fonctionnement de l'actionneur de la figure 2, conforme à un mode de réalisation de l'invention.

### Description détaillée

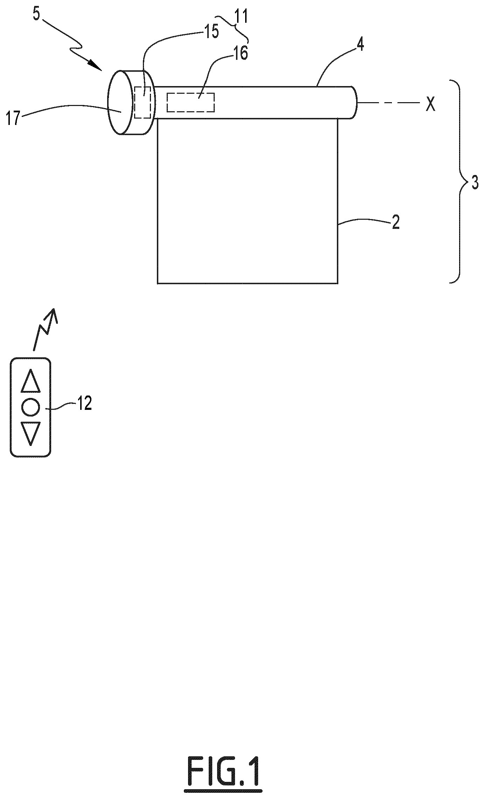

La figure 1 est un schéma simplifié d'un dispositif de fermeture, d'occultation et/ou de protection solaire 3, ce dispositif étant appelé par la suite « dispositif d'occultation ». Le dispositif d'occultation 3 est destiné à être installé au niveau d'une ouverture d'un bâtiment non représenté, et comprend un écran 2 mobile.

La présente invention s'applique à tout type de dispositif d'occultation, tel qu'un store motorisé, un portail motorisé simple ou double battant, une porte motorisée, ou un volet roulant motorisé.

L'écran 2 peut être une toile enroulable, ou un tablier composé de lames ou lattes horizontales empilables et/ou orientables.

Le dispositif d'occultation 3 comprend un dispositif d'entraînement motorisé 5.

Le dispositif d'entraînement motorisé 5 comprend un tube 4 d'enroulement de l'écran 2, un actionneur électromécanique 11 et une unité de commande 12.

L'actionneur électromécanique 11 est commandé par l'unité de commande 12. L'unité de commande 12 peut être une unité de commande locale et/ou une unité de commande centrale, et reliée en liaison filaire ou sans fil avec l'actionneur électromécanique 11. Lorsqu'une unité de commande locale et une unité de commande centrale sont présentes, l'unité de commande locale peut être pilotée par l'unité de commande centrale.

L'actionneur électromécanique 11 est, de préférence, configuré pour exécuter les commandes de déroulement ou d'enroulement de l'écran 2 du dispositif d'occultation 3, pouvant être émises, notamment, par l'unité de commande locale et/ou l'unité de commande centrale.

Le dispositif d'occultation 3 comprend soit l'unité de commande locale, soit l'unité de commande centrale, soit l'unité de commande locale et l'unité de commande centrale.

Avantageusement, l'unité de commande locale est un point de commande, pouvant être fixe ou nomade. Un point de commande fixe peut être un boîtier de commande destiné à être fixé sur un mur du bâtiment ou sur une face d'un cadre dormant d'une fenêtre ou d'une porte du bâtiment. A titre d'exemple nullement limitatif, un point de commande nomade peut être une télécommande, un téléphone intelligent ou une tablette.

Le tube d'enroulement 4 est agencé de sorte à être entraîné en rotation par l'actionneur électromécanique 11 autour d'un axe de rotation X.

Ici, l'écran 2 est enroulable sur le tube d'enroulement 4.

Ainsi, l'écran 2 du dispositif d'occultation 3 est enroulé sur le tube d'enroulement 4 ou déroulé autour de celui-ci, le tube d'enroulement 4 étant entraîné par le dispositif d'entraînement motorisé 5, en particulier par l'actionneur électromécanique 11.

De cette manière, l'écran 2 est mobile entre une position enroulée, en particulier haute, et une position déroulée, en particulier basse, et inversement.

L'écran 2 s'enroule et se déroule autour du tube d'enroulement 4, dont le diamètre intérieur est supérieur au diamètre externe de l'actionneur électromécanique 11, de sorte que l'actionneur électromécanique 11 peut être inséré dans le tube d'enroulement 4, lors de l'assemblage du dispositif d'occultation 3.

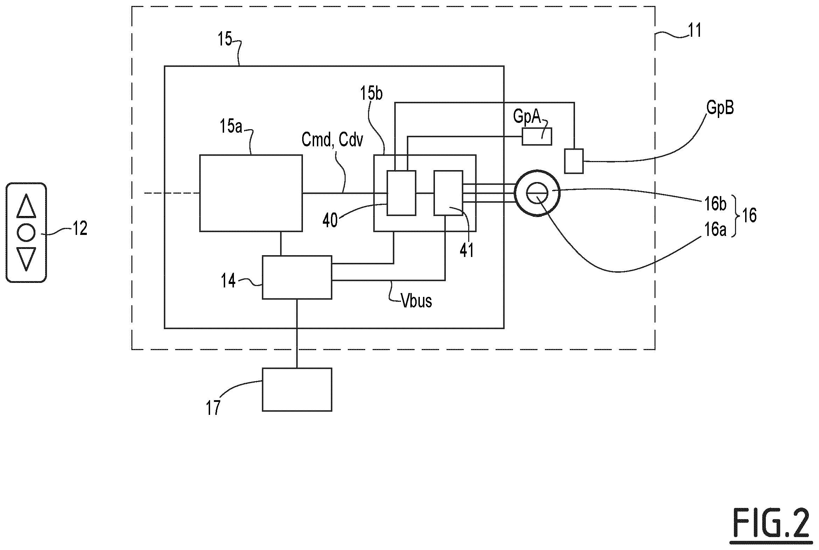

La figure 2 est un schéma simplifié d'un dispositif d'entraînement motorisé 5 selon un mode de réalisation de l'invention.

Par la suite, les termes « alimentation », « puissance », « intensité », « courant », et « tension », correspondent respectivement, sauf indication contraire, à une « alimentation électrique », une « puissance électrique », une « intensité électrique », un « courant électrique » et une « tension électrique ».

L'actionneur électromécanique 11 permet de déplacer l'écran 2 du dispositif d'occultation 3 entre une position complétement ouverte, où l'écran 2 est totalement enroulé sur le tube d'enroulement 4, et une position complétement fermée, où l'écran 2 obture totalement l'ouverture du bâtiment.

L'actionneur électromécanique 11 comprend un moteur électrique 16 à courant continu, avec ou sans balais.

Avantageusement, le moteur électrique 16 à courant continu est de type sans balais à commutation électronique, appelé également moteur « BLDC » (acronyme du terme anglo-saxon « BrushLess Direct Current ») ou « synchrone à aimants permanents »
En variante, le moteur électrique 16 à courant continu est de type avec balais à induction directe ou indirecte, appelé également moteur « DC » (acronyme du terme anglo-saxon « Direct Current »).

Le moteur électrique 16 à courant continu comprend un rotor 16a et un stator 16b, positionnés de manière coaxiale autour de l'axe de rotation X.

En fonctionnement, le moteur électrique 16 subit un couple résistant T exercé par les éléments qu'il doit entraîner, notamment du fait des frottements au sein du dispositif d'occultation 3 et du poids et/ou de la cinématique de l'écran 2.

L'actionneur électromécanique 11 comprend, en outre, une unité électronique de contrôle 15.

L'unité électronique de contrôle 15 comprend un module de communication 15a de l'actionneur électromécanique 11, et un module de contrôle moteur 15b, qui contrôle le moteur électrique 16. Le module de contrôle moteur 15b est configuré pour coopérer, autrement dit coopère, avec le module de communication 15a de l'actionneur électromécanique 11.

Le module de communication 15a est configuré pour recevoir et exécuter des ordres de commande de l'actionneur électromécanique 11 transmis par l'unité de commande 12.

Selon un mode de réalisation de l'invention, le module de communication 15a est configuré pour transmettre au module de contrôle moteur 15b une commande Cmd du moteur électrique 16, par exemple en réponse à un ordre de commande reçu de l'unité de commande 12.

Selon une variante de réalisation de l'invention, le module de communication 15a est configuré pour transmettre au module de contrôle moteur 15b une commande Cmd du moteur électrique 16 et une consigne de vitesse angulaire Cdv du moteur électrique 16, en particulier du rotor 16a, par exemple en réponse à un ordre de commande reçu de l'unité de commande 12.

L'unité électronique de contrôle 15 comprend, en outre, un module d'alimentation électrique 14. Le module d'alimentation électrique 14 est connecté électriquement à une source d'alimentation électrique 17. La source d'alimentation électrique 17 peut être de type à courant continu ou à courant alternatif, et être interne et/ou externe (autrement dit distante) à l'actionneur électromécanique 11.

Le module d'alimentation électrique 14 est configuré pour fournir une tension de bus Vbus continue à partir d'une source d'alimentation électrique 17.

Suivant un mode de réalisation de l'invention, la source d'alimentation électrique 17 est une source d'alimentation électrique en courant continu.

Suivant une variante de ce mode de réalisation, la source d'alimentation électrique en courant continu 17 est un commutateur réseau PoE (acronyme anglosaxon pour « Power over Ethernet ») connecté au module d'alimentation électrique 14 par l'intermédiaire d'un câble Ethernet de type RJ 45. Le commutateur réseau PoE est caractérisé par une valeur seuil maximum de puissance Pdec qu'il peut transmettre à l'actionneur électromécanique 11 au-delà duquel il arrête d'alimenter électriquement l'actionneur électromécanique 11. De manière connue, la valeur seuil maximum de puissance Pdec peut être prédéterminée par la classe PoE du commutateur réseau PoE et être, par exemple, égale à 15,4 watts. Avantageusement, la valeur seuil maximum de puissance Pmax est déterminée en fonction de la valeur seuil maximum de puissance Pdec de la source d'alimentation 17, par exemple égale à cette valeur Pdec.

Suivant un mode de réalisation de l'invention, la source d'alimentation électrique 17 est une batterie pouvant être interne ou externe à l'actionneur électromécanique 11. La batterie peut être de type rechargeable ou de type non-rechargeable. Suivant une variante de ce mode de réalisation dans laquelle la source d'alimentation électrique 17 est une batterie rechargeable, la source d'alimentation électrique 17 peut également comprendre au moins un panneau photovoltaïque connecté électriquement à la batterie rechargeable pour recharger la batterie rechargeable à partir de l'énergie solaire.

Selon un autre mode de réalisation de l'invention, la source d'alimentation électrique 17 est un réseau d'alimentation électrique en courant alternatif tel que le secteur. Dans ce mode de réalisation, le module d'alimentation électrique 14 comprend un circuit, non représenté, de redressement de la tension alternative du réseau d'alimentation électrique, configuré pour transformer la tension alternative du réseau d'alimentation électrique en tension continue.

La tension de bus Vbus n'est pas constante et ne dépend pas du moteur électrique 16. La tension de bus Vbus dépend de la tension de la source d'alimentation électrique 17. Elle est mise à jour en temps réel pour prendre en compte les fluctuations de tension de la source d'alimentation électrique 17, par exemple du secteur. Autrement dit, la tension de bus Vbus correspond à la tension disponible, à chaque instant, pour le moteur électrique 16.

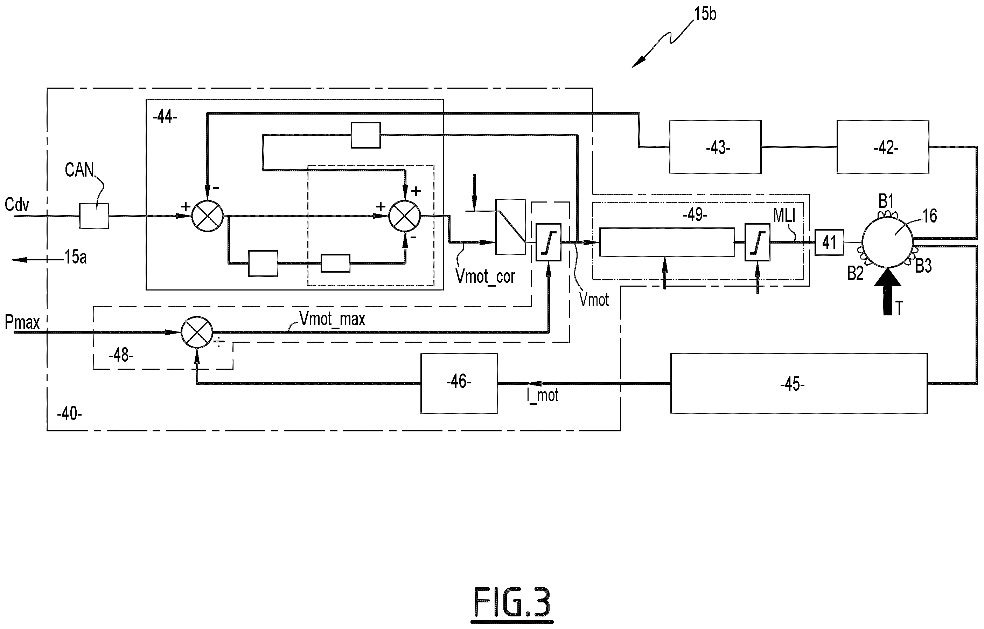

La figure 3 est un schéma électrique du module de contrôle moteur 15b, du moteur électrique 16 à courant continu, et de divers dispositifs de l'actionneur électromécanique 11.

Ici, le moteur électrique 16 à courant continu est de type sans balais à commutation électronique.

Le module de contrôle moteur 15b est configuré pour contrôler le fonctionnement du moteur électrique 16 en réponse à une commande Cmd. Ce module de contrôle moteur 15b comprend avantageusement un circuit de contrôle moteur 40 et un circuit de pilotage moteur 41.

Le stator 16b du moteur électrique 16 comprend trois bobines B1, B2, B3 alimentées de façon séquentielle par le circuit de pilotage moteur 41, ce qui génère un champ électromagnétique tournant provoquant l'entraînement en rotation du rotor 16a, le rotor 16a comprenant des aimants permanents s'orientant dans le sens du champ électromagnétique.

Le circuit de pilotage moteur 41, également appelé « onduleur » dans le cas d'un moteur électrique de type sans balais à commutation électronique, comprend un circuit de commutation non représenté formant un pont inverseur triphasé (également appelé « pont en H triphasé »), et un circuit de commande du pont inverseur triphasé non représenté. Le pont inverseur triphasé est alimenté électriquement par la tension de bus Vbus disponible fournie par le module d'alimentation électrique 14, la valeur de tension Vbus étant définie par rapport à une tension de référence Gnd. De manière connue, le circuit de commande du pont inverseur triphasé reçoit en entrée un signal MLI (acronyme de « Modulé en Largeur d'Impulsion ») provenant du circuit de contrôle moteur 40, le signal MLI étant caractérisé par un rapport cyclique RC configuré pour découper la tension de bus Vbus, de sorte à appliquer au moteur électrique 16 une tension dont la valeur moyenne fait varier la vitesse angulaire du moteur électrique 16.

Le circuit de pilotage moteur 41 comprend des commutateurs non représentés permettant de réaliser l'alimentation séquentielle des trois bobines B1, B2, B3.

Ici, les commutateurs du circuit de pilotage moteur 41 sont des transistors de type « MOSFET » (acronyme du terme anglo-saxon Metal Oxide Semiconductor Field Effect Transistor), et sont au nombre de six. Le type de commutateurs du circuit de pilotage et leur nombre ne sont nullement limitatifs. En particulier, les commutateurs du circuit de pilotage moteur 41 peuvent être des transistors de type « IGBT » (acronyme du terme anglo-saxon Insulated Gate Bipolar Transistor).

Pour que le moteur électrique 16 fonctionne, l'alimentation successive des trois bobines B1, B2, B3 doit être pilotée de manière synchrone avec la position du rotor 16a.

Le circuit de contrôle moteur 40 comprend une unité de traitement numérique non représentée. L'unité de traitement numérique est pourvue d'un processeur non représenté comprenant un correcteur de vitesse angulaire 44 du moteur électrique 16.

Le rotor 16a du moteur électrique 16 est couplé au tube d'enroulement 4 et peut faire tourner le tube d'enroulement à une vitesse angulaire constante lorsqu'un signal caractérisé par une tension continue constante, ou un signal MLI caractérisé par un rapport cyclique constant, est appliqué au moteur électrique 16. La modification de l'amplitude de la tension continue ou du rapport cyclique du signal MLI appliqué au moteur électrique 16 modifie la vitesse angulaire. En outre, le moteur électrique 16 peut changer le sens de rotation en réponse à un changement de polarité de la tension continue ou du signal MLI appliqué au moteur électrique 16.

Au sens de la présente invention, une consigne de vitesse angulaire n'est ni une tension moteur pilotant un moteur électrique en réponse à une commande, ni un signal MLI pilotant un moteur électrique en réponse à une commande. En effet, une consigne de vitesse angulaire Cdv est une valeur numérique généralement exprimée en rotation par minute ou « rpm », correspondant à une vitesse angulaire que l'on souhaite imposer au rotor 16a du moteur électrique 16.

L'unité de traitement numérique comprend une entrée pourvue d'un convertisseur analogique numérique CAN. L'entrée pourvue du convertisseur analogique numérique CAN est agencée pour transmettre un signal au processeur de l'unité de traitement numérique, à partir du signal qu'elle reçoit.

L'actionneur électromécanique 11 comprend, en outre, un dispositif 42 de détermination de la position angulaire du rotor 16a. Le dispositif de détermination 42 est configuré pour coopérer, autrement dit coopère, avec le module de contrôle moteur 15b. Le dispositif de détermination 42 et le module de contrôle moteur 15b sont configurés ensemble pour déterminer la position angulaire du rotor 16a.

Dans un mode de réalisation du dispositif de détermination 42, le dispositif de détermination 42 peut être de type magnétique et comprendre une roue codeuse non représentée et un ou plusieurs capteurs CpA, CpB, en particulier à effet Hall. La roue codeuse est reliée à une extrémité axiale du rotor 16a du moteur électrique 16. En outre, le ou chaque capteur CpA, CpB est assemblé sur une carte électronique de l'unité électronique de contrôle 15. Le type de dispositif de détermination 42 n'est pas limitatif et peut être différent, en particulier de type optique, par exemple un encodeur équipé d'un ou plusieurs capteurs optiques.

Dans un mode de réalisation du dispositif de détermination 42 associé spécifiquement à un moteur électrique 16 de type sans balais à commutation électronique dont le stator 16b comprend trois bobines B1, B2, B3 triphasées, le dispositif de détermination 42 comprend deux capteurs, en particulier à effet Hall, chaque capteur étant positionné au niveau d'une bobine correspondante. Les deux capteurs sont configurés pour coopérer, autrement dit coopèrent avec le module de contrôle moteur 15b de telle sorte que le module de contrôle moteur 15b puisse déterminer la position angulaire du rotor 16a à partir de signaux transmis par les capteurs. Le nombre de capteurs du moteur électrique 16 permettant de déterminer la position angulaire du rotor 16a n'est pas limitatif, et en particulier peut être de trois.

Dans un autre mode de réalisation, le moteur peut également être dépourvu de capteurs de détermination de la position angulaire du rotor 16a. La détermination de la position angulaire du rotor 16a peut être mise en œuvre par d'autres moyens de mesure, par exemple, par la détermination de la force électromotrice du moteur électrique 16.

Le module de contrôle moteur 15b comprend, en outre, une unité de détermination 43 de la vitesse angulaire du rotor 16a. L'unité de détermination 43 est configurée pour coopérer, autrement dit coopère, avec le dispositif de détermination 42 de la position angulaire du rotor 16a. L'unité de détermination 43 et le dispositif de détermination 42 sont configurés pour déterminer la vitesse angulaire de rotation du rotor 16a à partir de variations de la position angulaire rotor 16a dans le temps.

Le circuit de contrôle moteur 40 comprend, en outre, un correcteur de vitesse angulaire 44, tel qu'un correcteur PI (acronyme de « Proportionnel Intégral ») ou un correcteur PID (acronyme de « Proportionnel Intégral Dérivé »). Le correcteur de vitesse 44 angulaire est configuré pour coopérer, autrement dit coopère, avec l'unité de détermination 43 de la vitesse angulaire du rotor 16a.

Selon un mode de réalisation de l'invention, le correcteur de vitesse 44 angulaire est, en outre, configuré pour coopérer, autrement dit coopère avec le module de communication 15a. Le correcteur de vitesse angulaire 44 reçoit en entrée la vitesse angulaire déterminée par l'unité de détermination 43, et une consigne de vitesse angulaire Cdv imposée soit par une mémoire du circuit de contrôle moteur 40, soit par le module de communication 15a. Le correcteur de vitesse angulaire 44 est configuré pour fournir, autrement dit fournit, à sa sortie une valeur corrigée de tension moteur Vmot_cor pour ajuster la valeur de tension moteur Vmot de sorte à maintenir la vitesse angulaire du moteur électrique 16 à la consigne de vitesse angulaire Cdv du moteur électrique 16.

Le module de contrôle moteur 15b comprend, en outre, un dispositif de mesure 45 d'une valeur d'intensité Imot d'un courant traversant le moteur électrique 16, autrement dit d'un courant consommé par le moteur électrique 16.

Au sens de la présente invention, l'intensité Imot traversant le moteur électrique 16 est l'intensité d'un courant traversant ce moteur électrique 16 en fonctionnement.

Avantageusement, le dispositif de mesure 45 est configuré pour mesurer en temps réel la valeur d'intensité Imot, par exemple à l'aide d'une sonde de courant.

Selon un mode de réalisation du dispositif de mesure 45, l'intensité Imot traversant le moteur électrique 16 est obtenue au moyen d'un signal redressé positif prenant en considération le courant de chacune des trois bobines B1, B2, B3 du stator 16b.

Avantageusement, le module de contrôle moteur 15b comprend, en outre, un dispositif de filtrage 46 de la valeur d'intensité Imot traversant le moteur électrique 16 déterminée par l'unité de détermination 45. Le dispositif de filtrage 46 est configuré pour filtrer la valeur d'intensité Imot de sorte à limiter des variations brutales de la valeur d'intensité Imot, permettant ainsi d'améliorer la stabilité du module de contrôle moteur 15b. Le dispositif de filtrage 46 peut être, à titre d'exemple, un filtre numérique de type passe-bas du premier ordre.

Le module de contrôle moteur 15b, en particulier le circuit de contrôle moteur 40, comprend, en outre, un dispositif de limitation de puissance 48. Le dispositif de limitation de puissance 48 est configuré pour recevoir, autrement dit reçoit en entrée la valeur d'intensité Imot de courant déterminée par l'unité de détermination 46, et la valeur corrigée de tension moteur Vmot_cor déterminée par le correcteur de vitesse 44.

Le dispositif de limitation de puissance 48 est, en outre, configuré pour, d'une part, calculer une valeur seuil maximum de tension moteur Vmot_max admissible pour le moteur électrique 16, en fonction d'une valeur seuil maximum de puissance Pmax et de la valeur d'intensité Imot de courant déterminée par l'unité de détermination 45, et d'autre part pour limiter la valeur corrigée de tension moteur Vmot_cor déterminée par le correcteur de vitesse angulaire 44 à la valeur seuil maximum de tension moteur Vmot_max si la valeur corrigée de tension moteur Vmot_cor atteint ou dépasse la valeur seuil maximum de tension moteur Vmot_max, ou maintenir la valeur corrigée de tension moteur Vmot_cor si la valeur corrigée de tension moteur Vmot_cor est inférieure à la valeur seuil maximum de tension moteur Vmot_max.

En d'autres termes, la valeur seuil maximum de tension moteur Vmot_max admissible pour le moteur électrique 16 « bride » la valeur corrigée de tension moteur Vmot_cor calculée par le correcteur de vitesse angulaire 44 de telle sorte que, si le correcteur de vitesse angulaire 44 calcule une valeur corrigée de tension moteur Vmot_cor à appliquer au moteur électrique 16 inférieure à la valeur seuil maximum de tension moteur Vmot_max, alors il n'y a pas d'effet de limitation et la valeur de tension de bus appliquée au moteur électrique 16 est la valeur corrigée de tension moteur Vmot_cor calculée par le correcteur de vitesse angulaire 44. Si, au contraire, le correcteur de vitesse angulaire 44 calcule une valeur corrigée de tension moteur Vmot_cor supérieure ou égale à la valeur seuil maximum de tension moteur Vmot_max, c'est la valeur seuil maximum de tension moteur Vmot_max qui est appliquée au moteur électrique 16, avec comme effet une diminution de la vitesse angulaire du moteur électrique 16.

Avantageusement, la valeur seuil maximum de puissance Pmax correspond à une valeur seuil maximum de puissance autorisée par la source d'alimentation électrique en courant continu 17. Par exemple, lorsque l'actionneur électromécanique 11 est alimenté électriquement par un port d'un commutateur réseau PoE dont la capacité d'alimentation en puissance est limitée à une valeur de 25 watts, la valeur seuil maximum de puissance Pmax est prédéterminée pour être égale ou légèrement inférieure à la valeur de 25 watts. Ainsi, le procédé de commande en fonctionnement permet de limiter la puissance consommée par l'actionneur électromécanique 11 en dessous de la valeur seuil maximum de puissance autorisée par la source d'alimentation électrique en courant continu 17.

Avantageusement, la valeur seuil maximum de puissance Pmax est enregistrée dans une mémoire de l'unité électronique de contrôle 15, en particulier dans une mémoire du circuit de contrôle moteur 40.

Avantageusement, la valeur seuil maximum de puissance Pmax est déterminée comme étant égale à une valeur seuil de puissance Pact que peut consommer l'actionneur électromécanique 11. Ainsi, le module de contrôle moteur 15b, en particulier le circuit de contrôle moteur 40, permet de limiter la valeur de puissance consommée par l'actionneur électromécanique 11 à une valeur seuil maximum de puissance Pact que peut consommer l'actionneur électromécanique 11.

Le module de contrôle moteur 15b comprend, en outre, une unité de conversion 49 de la valeur de tension moteur Vmot fournie par le dispositif de limitation de puissance 48 en un signal MLI de pilotage du moteur électrique 16. L'unité de conversion 49 reçoit en entrée la valeur de tension moteur Vmot déterminée, c'est-à-dire calculée, par le dispositif de limitation de puissance 48, et la valeur de tension de bus Vbus du moteur électrique 16. La valeur de tension de bus Vbus peut être stockée dans une mémoire du module de contrôle 15, ou surveillée de manière à tenir compte de variations de la tension de bus Vbus, en particulier de variations de la tension de la source d'alimentation électrique 17. L'unité de conversion 49 fournit en sortie le signal MLI à destination du circuit de pilotage moteur 41, en particulier du circuit de commande du pont inverseur triphasé. L'unité de conversion 49 règle la valeur du rapport cyclique du signal MLI en fonction du rapport entre la valeur de la tension de bus Vbus et la valeur de la tension moteur Vmot. Par exemple, si l'unité de conversion 49 reçoit du dispositif de limitation de puissance 48 une valeur de tension moteur Vmot égale à 50 volts, alors que la valeur de la tension de bus Vbus est égale à 325 volts, l'unité de conversion 49 fourni au pont inverseur triphasé un signal MLI dont le rapport cyclique RC est égal à Vbus / Vmot = 50 / 325 = 15,38%.

Avantageusement, l'unité de conversion 49 peut limiter la valeur du rapport cyclique RC du signal MLI entre une valeur seuil minimum MLI_min et une valeur seuil maximum MLI_max. Par exemple, MLI_min vaut 5% et MLI_max vaut 95%. Ainsi, la limitation du rapport cyclique permet de respecter des contraintes de lecture de courant de cross-conduction du module contrôle moteur 15b. La valeur seuil minimum MLI_min permet d'assurer la capacité à lire le courant consommé par le moteur, car avec 0% les commutateurs ne seraient jamais fermés, rendant impossible la lecture du courant par dispositif de mesure 45 du courant Imot. La valeur seuil maximum permet de saturer la valeur du rapport cyclique du signal MLI.

La vitesse angulaire d'un moteur BLDC est directement liée à la valeur moyenne de tension appliquée au moteur Vmot. Donc, le fait de corriger la valeur de tension moteur Vmot en fonction de la valeur de tension de bus Vbus disponible assure une performance constante, quelle que soit la valeur de tension de bus Vbus disponible. Si on ne corrigeait pas la valeur de tension moteur Vmot, on aurait moins de dynamique avec une faible tension disponible et plus de dynamique avec une forte tension disponible. Avec la correction de tension, la régulation a la même performance quelle que soit la valeur de la tension d'alimentation.

L'unité de conversion 49 peut être n'importe quel contrôleur approprié, tel qu'un dispositif logique programmable (PLD), un microprocesseur, un circuit intégré spécifique à une application (ASIC) ou un réseau de portes programmables (FPGA).

En pratique, la valeur du courant Imot traversant le moteur électrique 16 en réponse à la commande Cmd est largement supérieure à la valeur du courant traversant le reste de l'unité électronique de contrôle 15, permettant ainsi d'estimer simplement la puissance consommée de l'actionneur électromécanique 11 lorsque le moteur électrique 16 est commandé.

Un inconvénient de ce procédé de commande en fonctionnement est qu'il est peu précis et que la valeur de puissance réellement consommée par l'actionneur électromécanique est mécaniquement supérieure à la valeur de puissance estimée uniquement à partir de la valeur de courant Imot traversant le moteur électrique 16.

Il est donc avantageux de pouvoir proposer un ajustement de la valeur seuil maximum de puissance Pmax pour tenir compte de la consommation globale, c'est-à-dire totale, de l'actionneur électromécanique 11.

Avantageusement, la valeur seuil maximum de tension Vmot_max applicable au moteur électrique 16 déterminée par le dispositif de limitation de puissance 48 est ajustée, en particulier pour tenir compte de la consommation globale/totale de l'actionneur électromécanique 11.

Avantageusement, la valeur seuil maximum de tension Vmot_max applicable au moteur électrique 16 est ajustée par l'intermédiaire d'une grille de valeurs associant des valeurs seuil maximum de tension, en fonction de de la position du moteur électrique 16, en particulier de la position de l'écran 2 du dispositif d'entraînement motorisé 5.

Avantageusement, la valeur seuil maximum de puissance Pmax peut être ajustée dynamiquement par l'intermédiaire du module de communication 15a.

Avantageusement, le module de communication 15a est configuré pour recevoir un message de délestage, tel qu'un ordre radio, par exemple selon un protocole io, zigbee, etc. Le message de délestage contient une information d'ajustement de la valeur seuil maximum de puissance Pmax.

Selon un mode de réalisation, l'information d'ajustement contient une nouvelle valeur seuil maximum de puissance Pmax_new destinée à remplacer la valeur seuil maximum de puissance Pmax préalablement enregistrée dans une mémoire de l'unité électronique de contrôle 15.

En variante, la mémoire de l'unité électronique de contrôle comprend une pluralité de valeurs seuil maximum de puissance Pmax_1, Pmax_2, ..., Pmax_N et l'information d'ajustement contient un ordre d'ajustement configuré pour sélectionner une valeur seuil maximum de puissance à ajuster, parmi la pluralité de valeurs seuil maximum de puissance Pmax_1, Pmax_2, ... , Pmax_N.

Par exemple, la mémoire de l'unité électronique de contrôle 15 comprend une première valeur seuil maximum de puissance Pmax_1 correspondant à une valeur seuil maximum de puissance associée à un mode de fonctionnement optimal de l'actionneur électromécanique 11, et une deuxième valeur seuil maximum de puissance Pmax_2 associée à un mode de fonctionnement limité de l'actionneur électromécanique 11, la valeur de Pmax_2 étant strictement inférieure à la valeur de Pmax_1. Le module de communication 15a reçoit un message de délestage comprenant une information MODE_DELESTAGE indiquant au module de contrôle moteur 15b de sélectionner la valeur Pmax_2.

Ainsi, l'actionneur électromécanique 11 continuer de fonctionner, mais avec une puissance inférieure, ayant pour effet une vitesse réduite.

Avantageusement, le message de délestage est programmé pour être envoyé en réaction un évènement périodique ou à l'accomplissement d'une condition de déclenchement.

Suivant une variante de réalisation de l'invention, le moteur électrique 16 à courant continu est de type avec balais. Suivant cette variante, les commutateurs du circuit de pilotage moteur 41 sont au nombre de quatre et sont agencés en pont en H, autrement dit forment un pont en H. Les commutateurs sont couplés de telle sorte que, lorsque deux des commutateurs sont conducteurs, une tension continue positive est appliquée au moteur électrique 16 à courant continu avec balais pour faire tourner le moteur électrique 16 à courant continu avec balais dans un premier sens de rotation. Lorsque les deux autres commutateurs du pont en H sont conducteurs, une tension continue négative est appliquée au moteur électrique 16 à courant continu avec balais pour le faire tourner dans un deuxième sens de rotation opposé au premier sens de rotation. Pour contrôler la vitesse du moteur électrique 16 à courant continu avec balais, l'unité de génération 49 pilote au moins un des commutateurs du pont en H à l'aide du signal MLI.

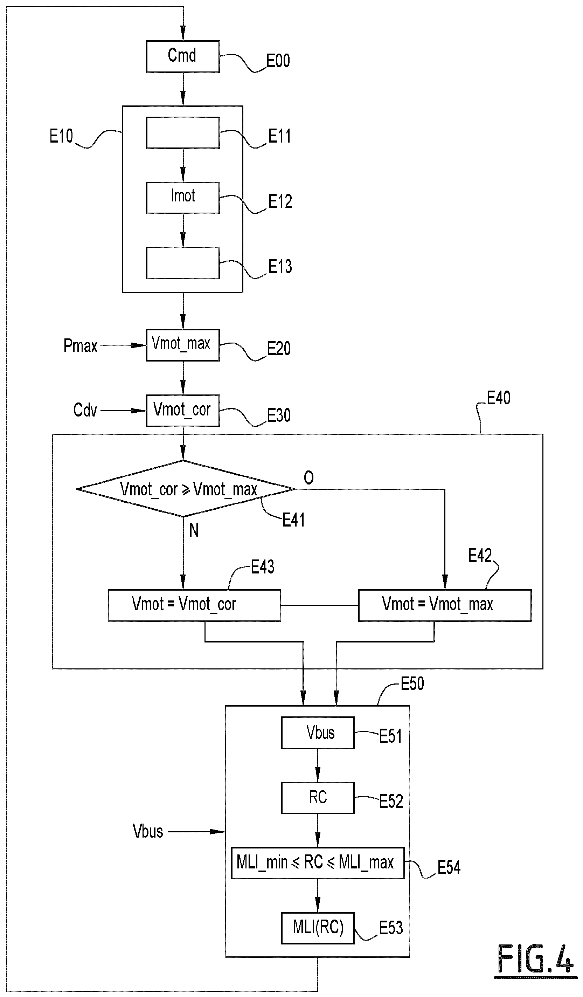

La figure 4 est un ordinogramme détaillant les étapes d'un procédé de commande en fonctionnement conforme à un mode de réalisation de l'invention.

Le procédé de commande en fonctionnement est exécuté par le circuit de contrôle moteur 40, en particulier par l'unité de traitement du circuit de contrôle moteur 40, en réponse à une commande Cmd reçue lors d'une étape préalable E00.

Le procédé de commande en fonctionnement comprend une première étape E10 de surveillance d'une amplitude d'un courant Imot traversant le moteur électrique 16 lors de la commande Cmd du moteur électrique 16.

Avantageusement, la première étape E10 de surveillance comprend une première sous-étape E11 de lecture d'un profil de courant traversant le moteur électrique 16, puis une deuxième sous-étape E12 de détermination de l'amplitude du courant Imot traversant le moteur électrique 16 à partir du profil de courant lu par la première sous-étape E11 de lecture.

Avantageusement, la première étape E10 comprend une sous-étape E13 de filtrage de l'amplitude du courant traversant le moteur électrique 16.

Le procédé de commande en fonctionnement comprend, en outre, une deuxième étape E20 de détermination d'une valeur seuil maximum de tension moteur Vmot_max admissible pour le moteur électrique 16, en fonction de l'amplitude du courant Imot traversant le moteur électrique 16, déterminée à la première étape E10, et d'une valeur seuil maximum de puissance Pmax prédéterminée. Par exemple, la valeur seuil maximum de tension moteur Vmot_max peut être calculée simplement avec l'équation suivante : $Vmot_max = Pmax / Imot$ (equation 1)

Avantageusement, la deuxième étape E20 de détermination est mise en œuvre par le dispositif de limitation de puissance 48.

Le procédé de commande en fonctionnement comprend, en outre, une troisième étape E30 de détermination d'une valeur de tension moteur Vmot à appliquer au moteur électrique 16 de telle sorte à ce que la tension moteur Vmot permette de maintenir la consigne de vitesse angulaire Cdv du moteur électrique 16 lors de la commande Cmd du moteur électrique 16.

Avantageusement, la troisième étape E30 de détermination est mise en œuvre par le correcteur de vitesse angulaire 44, le correcteur de vitesse angulaire 44 recevant en entrée la consigne de vitesse angulaire Cdv et la vitesse angulaire estimée par le dispositif de détermination 43 de la vitesse angulaire du moteur électrique 16.

Le procédé de commande en fonctionnement comprend, en outre, une quatrième étape E40 de limitation de la valeur de tension moteur Vmot, déterminée par la troisième étape E30 de détermination, à la valeur seuil maximum de tension moteur Vmot_max, déterminée par la deuxième étape E20 de détermination, si la valeur de tension moteur Vmot atteint ou dépasse la valeur seuil maximum de tension moteur Vmot_max, et de maintien de la valeur de tension moteur Vmot à la valeur corrigée de tension moteur Vmot_cor si la valeur de tension moteur Vmot est inférieure à la valeur seuil maximum de tension moteur Vmot_max.

Avantageusement, la quatrième étape E40 de limitation comprend une première sous-étape E41 de comparaison de la valeur corrigée de tension moteur Vmot_cor déterminée par la troisième étape E30 de détermination avec la valeur seuil maximum de tension moteur Vmot_max déterminée par la deuxième étape E20 de détermination. Si la comparaison de la sous-étape E41 révèle que la valeur corrigée de tension moteur Vmot_cor atteint ou dépasse la valeur seuil maximum de tension Vmot_max, le procédé de commande en fonctionnement met en œuvre une deuxième sous-étape E42 de limitation de la valeur corrigée de tension moteur Vmot_cor à appliquer au moteur électrique 16 à la valeur seuil maximum de tension moteur Vmot_max. Si la comparaison de la sous-étape E41 révèle que la valeur corrigée de tension moteur Vmot_cor est strictement inférieure à la valeur seuil maximum de tension Vmot_max, le procédé de commande en fonctionnement met en œuvre une troisième sous-étape E43 de maintien de la valeur corrigée de tension moteur Vmot_cor à appliquer au moteur électrique 16.

Avantageusement, le procédé de commande en fonctionnement comprend, en outre, une cinquième étape E50 d'application de la tension moteur Vmot au moteur électrique 16, la tension moteur Vmot ayant été déterminée par le dispositif de limitation de puissance 48 lors de la quatrième étape E40 de limitation.

Avantageusement, la cinquième étape E50 d'application de la tension moteur Vmot comprend une première sous-étape E51 de surveillance de la tension de bus Vbus, une deuxième sous-étape E52 de détermination du rapport cyclique RC d'un signal MLI à appliquer au moteur électrique 16 en fonction de la valeur de tension moteur Vmot déterminée par la quatrième étape 40 de limitation et de la valeur de tension de bus Vbus déterminée par la première sous-étape E51 de surveillance, et une troisième sous-étape E53 d'application, au moteur électrique 16, de la tension moteur Vmot déterminée par la deuxième sous-étape E52 de détermination.

Par exemple, si la quatrième étape E40 détermine une valeur de tension moteur Vmot égale à 50 volts, et si la première sous-étape E51 détermine une valeur de tension de bus Vbus égale à 325 volts, la deuxième sous-étape E52 détermine un rapport cyclique RC du signal MLI à appliquer au moteur électrique égal à Vbus / Vmot = 50 / 325 = 15,38%, et la troisième sous-étape E53 applique au moteur électrique 16 ,en particulier au circuit de pilotage moteur 41, un signal MLI de rapport cyclique 15,38%.

Avantageusement, la cinquième étape E50 d'application de la tension moteur Vmot comprend une quatrième sous-étape E54 de limitation de la valeur du rapport cyclique RC du signal MLI entre une valeur seuil minimum MLI_min et une valeur seuil maximum MLI_max, la valeur du rapport cyclique RC du signal MLI ayant été déterminée par la deuxième sous-étape E52 de détermination. Cette quatrième sous-étape est alors mise en œuvre avant la troisième sous-étape E53

Selon une variante de l'invention, lors de l'étape E40, et dans le cas où la valeur de tension moteur Vmot atteint ou dépasse la valeur seuil maximum de tension moteur Vmot_max, on coupe l'alimentation du moteur électrique 16, c'est-à-dire on met à zéro la valeur de tension moteur Vmot, au lieu de la limiter à la valeur seuil maximum de tension moteur Vmot_max comme mentionné ci-dessus. Dans ce cas, et en comparaison à un arrêt du commutateur réseau PoE mentionné dans la partie introductive de la présente demande, la présente invention permet de gérer la coupure par l'actionneur lui-même. Ceci évite des complications liées à une coupure du commutateur réseau POE, notamment des perturbations du réseau au redémarrage du commutateur réseau POE.

Quel que soit le mode de réalisation, en surveillant la valeur de tension moteur Vmot par rapport à un seuil dépendant d'une valeur seuil maximum de puissance Vmot_max, on s'affranchit au moins en partie de variables non maîtrisées, notamment le couple résistant T, qui est lui dépendant de la charge entraînée par l'actionneur électromécanique.

Les différents modes de réalisation et les différentes variantes définis ci-dessus peuvent être combinés afin de générer de nouveaux modes de réalisation de l'invention.

## Revendications

1. Procédé de commande en fonctionnement d'un actionneur électromécanique (11) en réponse à une commande (Cmd), l'actionneur électromécanique (11) comprenant un moteur électrique (16) à courant continu et un module de contrôle moteur (15b), le moteur électrique (16) étant piloté, en réponse à la commande (Cmd), par une tension moteur (Vmot) en fonction d'une valeur de tension de bus (Vbus), le procédé comprenant une étape consistant à surveiller (E10) l'amplitude d'un courant (Imot) traversant le moteur électrique (16) lors de la commande (Cmd) du moteur électrique (16), le procédé étant **caractérisé en ce que** le module de contrôle moteur (15b) comprend un correcteur de vitesse angulaire (44) de rotation du moteur électrique (16), le correcteur de vitesse angulaire (44) délivrant en sortie une valeur corrigée de la tension moteur (Vmot_cor), de sorte à maintenir une consigne de vitesse angulaire (Cdv) du moteur électrique (16) lors de la commande (Cmd) du moteur électrique (16) et **en ce que** le procédé comprend au moins les étapes suivantes :
- déterminer (E20) une valeur seuil maximum de tension moteur (Vmot_max) admissible pour le moteur électrique (16) en fonction de l'amplitude du courant (Imot) traversant le moteur électrique (16) et d'une valeur seuil maximum de puissance (Pmax) prédéterminée ;
- limiter (E40) la valeur de tension moteur (Vmot) à la valeur seuil maximum de tension moteur (Vmot_max), ou mettre à zéro la valeur de tension moteur (Vmot), si la valeur de tension moteur (Vmot) atteint ou dépasse la valeur seuil maximum de tension moteur (Vmot_max) et maintenir la valeur de tension moteur (Vmot) à la valeur corrigée de tension moteur (Vmot_cor) si la valeur de tension moteur (Vmot) est inférieure à la valeur seuil maximum de tension moteur (Vmot_max).

2. Procédé de commande en fonctionnement selon la revendication 1, dans lequel le module de contrôle moteur (15b) comprend un pont inverseur alimenté électriquement par la tension de bus (Vbus) et un circuit de commande du pont inverseur, et dans lequel le circuit de commande est piloté en réponse à la commande (Cmd) par un signal modulé en largeur d'impulsion (MLI) de telle sorte que le signal modulé en largeur d'impulsion (MLI) applique la tension moteur (Vmot) au moteur électrique (16), le signal modulé en largeur d'impulsion (MLI) étant **caractérisé par** un rapport cyclique (RC).

3. Procédé de commande en fonctionnement selon la revendication 1 ou selon la revendication 2, dans lequel le courant (Imot) traversant le moteur électrique (16) est filtré de telle sorte à limiter des variations brutales de la valeur d'intensité (Imot).

4. Procédé de commande en fonctionnement selon l'une quelconque des revendications 1 à 3, dans lequel la valeur seuil maximum de puissance (Pmax) est égale à une valeur seuil de puissance (Pact) que peut consommer l'actionneur électromécanique (11).

5. Procédé de commande en fonctionnement selon l'une quelconque des revendications 1 à 4, dans lequel la tension de bus (Vbus) est fournie à partir d'une source d'alimentation électrique (17), la valeur seuil maximum de puissance (Pmax) étant déterminée en fonction d'une valeur seuil de puissance fournie par la source d'alimentation électrique (17).

6. Procédé de commande en fonctionnement selon la revendication 5, dans lequel la valeur seuil maximum de puissance (Pmax) est déterminée en fonction d'une valeur seuil de puissance (Pdec) de la source d'alimentation électrique (17) au-delà de laquelle la source d'alimentation électrique (17) cesse d'alimenter électriquement l'actionneur électromécanique (11).

7. Actionneur électromécanique (11) **caractérisé en ce qu'**il comprend un module de contrôle moteur (15b) configuré pour mettre en oeuvre un procédé de commande en fonctionnement conforme à l'une quelconque des revendications 1 à 6.

8. Actionneur électromécanique (11) selon la revendication 7, dans lequel le moteur électrique (16) à courant continu est de type sans balais.

9. Actionneur électromécanique (11) selon la revendication 7 ou selon la revendication 8, comprenant un module contrôle moteur (15b) configuré pour mettre en oeuvre un procédé de commande en fonctionnement conforme à la revendication 5, dans lequel la source d'alimentation électrique (17) est une source d'alimentation électrique en courant continu.

10. Actionneur électromécanique (11) selon la revendication 7 ou selon la revendication 8, comprenant un module contrôle moteur (15b) configuré pour mettre en oeuvre un procédé de commande en fonctionnement conforme à la revendication 5, dans lequel la source d'alimentation électrique (14) est une batterie de type rechargeable ou non-rechargeable.

11. Dispositif d'occultation (3) comprenant un écran mobile (2) et un dispositif d'entraînement motorisé (5) incluant un actionneur électromécanique (11), **caractérisé en ce que** l'actionneur électromécanique (11) est selon l'une des revendications 7 à 10.

## Patentansprüche

1. Steuerungsverfahren zur Betriebssteuerung eines elektromechanischen Aktuators (11) als Reaktion auf einen Steuerbefehl (Cmd), wobei der elektromechanische Aktuator (11) einen Gleichstrom-Elektromotor (16) und ein Motorsteuerungsmodul (15b) umfasst, wobei der Elektromotor (16) als Reaktion auf den Steuerbefehl (Cmd) durch eine Motorspannung (Vmot) in Abhängigkeit von einem Busspannungswert (Vbus) angesteuert wird, wobei das Verfahren einen Schritt umfasst, der darin besteht, die Stärke eines durch den Elektromotor (16) fließenden Stroms (Imot) während der Steuerung (Cmd) des Elektromotors (16) zu überwachen (E 10), wobei das Verfahren **dadurch gekennzeichnet ist, dass** das Motorsteuerungsmodul (15b) einen Winkelgeschwindigkeitsregler (44) für die Drehung des Elektromotors (16) umfasst, wobei der Winkelgeschwindigkeitsregler (44) am Ausgang einen korrigierten Motorspannungswert (Vmot_cor) liefert, um einen Winkelgeschwindigkeitssollwert (Cdv) des Elektromotors (16) während der Steuerung (Cmd) des Elektromotors (16) aufrechtzuerhalten, und dass das Verfahren mindestens die folgenden Schritte umfasst:
- Bestimmen (E20) eines maximalen Schwellenwerts der Motorspannung (Vmot_max), der für den Elektromotor (16) zulässig ist, in Abhängigkeit von der Stärke des durch den Elektromotor (16) fließenden Stroms (Imot) und einem vorbestimmten maximalen Schwellenwert der Leistung (Pmax),
- Begrenzen (E40) des Motorspannungswerts (Vmot) auf den maximalen Schwellenwert der Motorspannung (Vmot_max) oder Setzen des Motorspannungswerts (Vmot) auf null, wenn der Motorspannungswert (Vmot) den maximalen Schwellenwert der Motorspannung (Vmot_max) erreicht oder überschreitet, und Halten des Motorspannungswerts (Vmot) auf dem korrigierten Motorspannungswert (Vmot_cor), wenn der Motorspannungswert (Vmot) unter dem maximalen Schwellenwert der Motorspannung (Vmot_max) liegt.

2. Steuerungsverfahren zur Betriebssteuerung nach Anspruch 1, bei dem das Motorsteuerungsmodul (15b) eine durch die Busspannung (Vbus) elektrisch gespeiste Wechselrichterbrücke und eine Steuerschaltung der Wechselrichterbrücke umfasst und bei dem die Steuerschaltung als Reaktion auf den Steuerbefehl (Cmd) durch ein pulsweitenmoduliertes Signal (Pulsweitenmodulation) derart angesteuert wird, dass das pulsweitenmodulierte Signal (Pulsweitenmodulation) die Motorspannung (Vmot) an den Elektromotor (16) anlegt, wobei das pulsweitenmodulierte Signal (Pulsweitenmodulation) durch ein Tastverhältnis (RC) gekennzeichnet ist.

3. Steuerungsverfahren zur Betriebssteuerung nach Anspruch 1 oder nach Anspruch 2, bei dem der durch den Elektromotor (16) fließende Strom (Imot) derart gefiltert wird, dass abrupte Schwankungen des Stromstärkewerts (Imot) begrenzt werden.

4. Steuerungsverfahren zur Betriebssteuerung nach einem der Ansprüche 1 bis 3, bei dem der maximale Schwellenwert der Leistung (Pmax) gleich einem Schwellenwert der Leistung (Pact) ist, die der elektromechanische Aktuator aufnehmen kann

5. Steuerungsverfahren zur Betriebssteuerung nach einem der Ansprüche 1 bis 4, bei dem die Busspannung (Vbus) von einer Stromversorgungsquelle (17) bereitgestellt wird, wobei der maximale Schwellenwert der Leistung (Pmax) in Abhängigkeit von einem Schwellenwert der von der Stromversorgungsquelle (17) bereitgestellten Leistung bestimmt wird.

6. Steuerungsverfahren zur Betriebssteuerung nach Anspruch 5, bei dem der maximale Schwellenwert der Leistung (Pmax) in Abhängigkeit von einem Schwellenwert der Leistung (Pdec) der Stromversorgungsquelle (17) bestimmt wird, oberhalb dessen die Stromversorgungsquelle (17) aufhört, den elektromechanischen Aktuator (11) elektrisch zu versorgen.

7. Elektromechanischer Aktuator (11), **dadurch gekennzeichnet, dass** er ein Motorsteuerungsmodul (15b) umfasst, das dazu konfiguriert ist, ein Steuerungsverfahren zur Betriebssteuerung nach einem der Ansprüche 1 bis 6 durchzuführen.

8. Elektromechanischer Aktuator (11) nach Anspruch 7, bei dem der Gleichstrom-Elektromotor (16) bürstenlos ist.

9. Elektromechanischer Aktuator (11) nach Anspruch 7 oder nach Anspruch 8, umfassend ein Motorsteuerungsmodul (15b), das dazu konfiguriert ist, ein Steuerungsverfahren zur Betriebssteuerung nach Anspruch 5 durchzuführen, bei dem die Stromversorgungsquelle (17) eine Gleichstromversorgungsquelle ist.

10. Elektromechanischer Aktuator (11) nach Anspruch 7 oder nach Anspruch 8, umfassend ein Motorsteuerungsmodul (15b), das dazu konfiguriert ist, ein Steuerungsverfahren zur Betriebssteuerung nach Anspruch 5 durchzuführen, bei dem die Stromversorgungsquelle (14) eine Batterie wiederaufladbaren oder nicht wiederaufladbaren Typs ist.

11. Verdunkelungsvorrichtung (3), umfassend einen beweglichen Schirm (2) und eine motorisierte Antriebsvorrichtung (5), die einen elektromechanischen Aktuator (11) einschließt, **dadurch gekennzeichnet, dass** der elektromechanische Aktuator (11) einem der Ansprüche 7 bis 10 entspricht.

## Claims

1. A method for in-operation control of an electromechanical actuator (11) in response to a command (Cmd), the electromechanical actuator (11) comprising a direct-current electric motor (16) and a motor control unit (15b), the electric motor (16) being driven, in response to the command (Cmd), by a motor voltage (Vmot) as a function of a bus voltage value (Vbus), the method comprising a step consisting of monitoring (E10) the magnitude of a current (Imot) flowing through the electric motor (16) during the command (Cmd) of the electric motor (16), the method being **characterized in that** the motor control unit (15b) comprises an electric motor (16) rotation angular speed controller (44), the angular speed controller (44) delivering at its output a corrected motor voltage value (Vmot_cor), so as to maintain an angular speed setpoint (Cdv) of the electric motor (16) during the command (Cmd) of the electric motor (16) and **in that** the method comprises at least the following steps:
- determining (E20) a maximum motor voltage threshold value (Vmot_max) admissible for the electric motor (16) as a function of the magnitude of the current (Imot) flowing through the electric motor (16) and of a predetermined maximum power threshold value (Pmax),
- limiting (E40) the motor voltage value (Vmot) to the maximum motor voltage threshold value (Vmot_max), or setting the motor voltage value (Vmot) to zero, if the motor voltage value (Vmot) reaches or exceeds the maximum motor voltage threshold value (Vmot_max) and maintaining the motor voltage value (Vmot) at the corrected motor voltage value (Vmot_cor) if the motor voltage value (Vmot) is lower than the maximum motor voltage threshold value (Vmot_max).

2. The method for in-operation control according to claim 1, wherein the motor control unit (15b) comprises an inverter bridge electrically supplied by the bus voltage (Vbus) and a control circuit for the inverter bridge, and wherein the control circuit is driven in response to the command (Cmd) by a pulse-width-modulated signal (MLI) such that the pulse-width-modulated signal (MLI) applies the motor voltage (Vmot) to the electric motor (16), the pulse-width-modulated signal (MLI) being **characterized by** a duty cycle (RC).

3. The method for in-operation control according to claim 1 or according to claim 2, wherein the current (Imot) flowing through the electric motor (16) is filtered so as to limit abrupt variations in the current intensity value (Imot).

4. The method for in-operation control according to any one of claims 1 to 3, wherein the maximum power threshold value (Pmax) is equal to a power threshold value (Pact) that the electromechanical actuator (11) can consume.

5. The method for in-operation control according to any one of claims 1 to 4, wherein the bus voltage (Vbus) is provided from an electrical power supply source (17), the maximum power threshold value (Pmax) being determined as a function of a power threshold value of the power provided by the electrical power supply source (17).

6. The method for in-operation control according to claim 5, wherein the maximum power threshold value (Pmax) is determined as a function of a power threshold value (Pdec) of the electrical power supply source (17) beyond which the electrical power supply source (17) ceases to electrically supply the electromechanical actuator (11).

7. An electromechanical actuator (11) **characterized in that** it comprises a motor control unit (15b) configured to implement a method for in-operation control according to any one of claims 1 to 6.

8. The electromechanical actuator (11) according to claim 7, wherein the direct-current electric motor (16) is of the brushless type.

9. The electromechanical actuator (11) according to claim 7 or according to claim 8, comprising a motor control unit (15b) configured to implement a method for in-operation control according to claim 5, wherein the electrical power supply source (17) is a direct-current electrical power supply source.

10. The electromechanical actuator (11) according to claim 7 or according to claim 8, comprising a motor control unit (15b) configured to implement a method for in-operation control according to claim 5, wherein the electrical power supply source (14) is a battery of the rechargeable or non-rechargeable type.

11. A screening device (3) comprising a movable screen (2) and a motorized drive device (5) including an electromechanical actuator (11), **characterized in that** the electromechanical actuator (11) is according to one of claims 7 to 10.
